## Europäisches Patentamt
## European Patent Office
## Office européen des brevets

(19)

(11) Veröffentlichungsnummer: **0 059 853**
**B1**

(12) # EUROPÄISCHE PATENTSCHRIFT

(45) Veröffentlichungstag der Patentschrift:
**04.12.85**

(51) Int. Cl.⁴: **F 16 H 5/28,** F 15 B 11/12, B 60 K 20/14

(21) Anmeldenummer: **82101051.9**

(22) Anmeldetag: **12.02.82**

(54) **Hilfskraftbetätigte Getriebesteuerung.**

(30) Priorität: **07.03.81 DE 3108781**

(43) Veröffentlichungstag der Anmeldung:
**15.09.82 Patentblatt 82/37**

(45) Bekanntmachung des Hinweises auf die Patenterteilung:
**04.12.85 Patentblatt 85/49**

(84) Benannte Vertragsstaaten:
**AT CH DE FR GB IT LI SE**

(56) Entgegenhaltungen:
**DE - A - 2 036 858**
**DE - B - 1 187 984**
**FR - A - 2 005 084**
**GB - A - 888 036**
**US - A - 2 575 982**
**US - A - 4 136 576**

(73) Patentinhaber: **WABCO Westinghouse Fahrzeugbremsen GmbH, Am Lindener Hafen 21 Postfach 91 12 80, D-3000 Hannover 91 (DE)**

(72) Erfinder: **Klatt, Alfred, Dannhorstweg 2, D-3101 Wathlingen (DE)**

(74) Vertreter: **Schrödter, Manfred, WABCO Westinghouse Fahrzeugbremsen GmbH Am Lindener Hafen 21 Postfach 91 12 80, D-3000 Hannover 91 (DE)**

BUNDESDRUCKEREI BERLIN

## Beschreibung

Die Erfindung bezieht sich auf eine hilfskraftbetätigte Getriebesteuerung gemäß dem Oberbegriff des Patentanspruchs 1.

In Lastkraftwagen ist es ab einer bestimmten Größe notwendig, die einzelnen Gänge der Gangschaltung nicht direkt durch die Kraft des Fahrers, sondern hilfskraftbetätigt einzulegen. Als Hilfskraft wird dabei Druckluft verwendet. Dies bringt verschiedene Vorteile mit sich. So ist einmal die Kraft zum Einlegen der Gänge, welche große Getriebe benötigen, recht hoch. Zum anderen ist es bei einem hilfskraftbetätigten Getriebe nicht mehr notwendig, das Getriebe direkt unter dem Schalthebel anzuordnen. Außerdem ergeben sich weitere Vorteile, wie konstante Betätigungskraft und die Möglichkeit, die Betätigungszylinder an geeigneten Stellen im Getriebe anzubringen.

Die Getriebeschaltung in Kraftfahrzeugen ist meist in H-Anordnung ausgeführt. Für größere Lastkraftwagen ist ein Getriebe mit 12 Gängen besonders geeignet. Diese können z. B. durch ein Hauptgetriebe in Doppel-H-Schaltung mit einer Vorschaltgruppe erreicht werden. Durch die Vorschaltgruppe wird die Zahl der normalen Gänge verdoppelt.

Zum Einlegen der Gänge bei einem Getriebe mit Doppel-H-Schaltung sind zwei Betätigungszylinder, nämlich ein Gassenzylinder und ein Gangzylinder, erforderlich. Zum Einstellen der Schaltgasse dient der Gassenzylinder mit vier Stellungen für die Gänge R (Rückwärts), 1/2, 3/4, 5/6.

Zum Einstellen der Gänge dient der Gangzylinder mit drei Stellungen für vorn, hinten und neutral.

Aus der FR-A-2 005 084, die die Merkmale aus dem Oberbegriff des Anspruchs zeigt, ist ein Gerät zum halb- oder vollautomatischen Schalten von Zahnräderwechselgetrieben für Kraftfahrzeuge bekannt, das einen derartigen Dreistellungsgangzylinder aufweist. In der Mittelstellung (Neutral) stützt sich ein Hauptkolben des Gangzylinders gegen einen Hilfskolben ab. Zum sehr schnellen Gangwechsel im Synchron-Punkt von Getriebe- und Motordrehzahl ist die bekannte Anordnung mit vorgesteuerten Ventilen ausgerüstet.

Beim hilfskraftbetätigten Einlegen der Gänge werden je nach Gang verschiedene Kräfte bzw. Drücke benötigt. Dies liegt an der zur Synchronisation benötigten Kraft, die z. B. für den ersten Gang am höchsten ist. Nach erfolgter Einlegung eines Ganges sollte zur Schonung der Mechanik die Krafteinwirkung aufhören.

Der Erfindung liegt die Aufgabe zugrunde, eine hilfskraftbetätigte Getriebesteuerung der eingangs genannten Art zu schaffen, welche einen Gangzylinder mit drei Stellungen aufweist, der mit einfachen Mitteln sicher in die Mittelstellung steuerbar ist, und die das Einlegen der verschiedenen Gänge zur Schonung der Mechanik mit unterschiedlichen Kräften gestattet.

Diese Aufgabe wird durch die im Hauptanspruch enthaltene Erfindung gelöst. Weiterbildungen und vorteilhafte Ausführungsformen der Erfindung sind in den Unteransprüchen angegeben.

Zur näheren Erläuterung eines Ausführungsbeispiels der Erfindung dient eine Zeichnung, in welcher mit einer Bezugsziffer 1 ein Gangzylinder bezeichnet ist, dessen Kolben 4 über eine Kolbenstange 14 auf ein Getriebe 20 einwirkt. Der Gangzylinder 1 dient zum Einschalten der Gänge und hat die drei Stellungen vorne, neutral und hinten. Zur Betätigung des Gangzylinders 1 dient ein Druckluftvorrat 13. An den Gangzylinder 1 ist ein Hilfszylinder 2 angebaut, dessen Kolben 3 zur Fixierung des Kolbens 4 in der Mittelstellung (neutral) dient. Zur Steuerung der Druckluftzufuhr zu den Druckräumen des Gangzylinders 1 und des Hilfszylinders 2 dienen Magnetventile 5, 8, 10. Diese Magnetventile werden von einer elektronischen Auswerteschaltung 12 angesteuert. Der Auswerteschaltung 12 werden vom Getriebe 20 über eine Leitung 21 Informationen über die jeweilige Getriebedrehzahl und den eingelegten Gang bzw. die eingelegte Neutralstellung zugeführt. Außerdem werden von einem Drucksensor 11 Informationen über die in den Druckräumen 6 und 7 des Gangzylinders 1 herrschenden Drücke zugeführt. Weiter wird der Auswerteschaltung 12 von einem Bedienungsgerät 23 eine Information über den zu schaltenden Gang zugeführt. Diese Information wird aus der Stellung eines Schalthebels 22 abgeleitet.

Die in der Fig. dargestellte Getriebesteuerung funktioniert wie folgt. Für die (gezeichnete) Mittelstellung ist der Rückraum 7 mit einem gegenüber dem Druck des Vorrats 13 verminderten Druck versorgt, der Vorraum 6 ist drucklos, und der Hilfszylinder 2 ist mit dem Vorratsdruck versorgt. Hierzu sind zunächst die beiden Magnetventile 8 und 10 auf Durchgang geschaltet. Die Auffüllung des Rückraumes 7 erfolgt wegen einer in der Leitung liegenden Drossel 9 nicht schlagartig. Nach Erreichen des verminderten Druckes, welcher von einem Drucksensor 11 abgefühlt wird, gibt dieser einen Impuls auf die Auswerteschaltung 12, wodurch das Magnetventil 8 in die (gezeichnete) Haltestellung umgeschaltet wird. Der Hilfszylinder 2 ist mit dem vollen Vorratsdruck beaufschlagt und hält so mittels des Kolbens 3 und einer Kolbenstange 24 den Kolben 4 des Gangszylinders 1 in der Mittelstellung (Neutralstellung).

Zur Einlegung der vorderen Stellung wird durch Umschaltung des 4/2-Wege-Wechselventils 10 der Vorraum 6 des Gangzylinders 1 belüftet, sowie der Rückraum 7 entlüftet. Wie bereits oben erwähnt, ist es vorteilhaft, die verschiedenen Gänge, mit unterschiedlicher Kraft bzw. unterschiedlichem Druck einzulegen. Dabei benötigt der erste Gang die volle Kraft, die höheren Gänge jeweils eine niedrigere Kraft. Zur Erzielung eines gegenüber dem Vorratsdruck verminderten Druckes im Vorraum 6 wird wiederum das 2/2-Wegeventil 8 vor Erreichen des vollen Behälterdruckes zurückgeschaltet, und so der verminderte Druck gehalten. Die Höhe des verminderten Druckes hängt, wie eingangs erwähnt, vom zu schaltenden Gang ab. Im Prinzip wird also der einzustellende Druck mit dem Drucksensor 11 gemessen und in der Auswerteschaltung 12 mit einem dem jeweils eingestellten Gang zugeordneten Vergleichswert verglichen. Bei Gleichheit dieser Werte wird dann das 2/2-Wegeventil 8 abgesperrt.

Die Druck- bzw. Kraftbegrenzung kann auch in Abhängigkeit von der Getriebedrehzahl oder von einem Signal durch den Fahrer bewirkt werden. Im letzteren Fall kann der Fahrer z. B. mittels eines Schalters bestimmen, daß das Getriebe durch eine Druckreduzierung bzw. Langsamschaltung besonders geschont wird. Es kann aber auch durch den Fahrer die Druckreduzierung, aufgehoben werden (Schnellschaltung), wenn es die jeweilige Situation erfordert.

Anstatt den Druck im Gangzylinder 1 mittels eines Drucksensors 11 abzutasten, kann die Begrenzung der Auffüllzeit auch durch ein in der Auswerteschaltung 12 enthaltenes Zeitglied (nicht dargestellt) erfolgen. Dieses bewirkt eine Rückschaltung des Ventils 8 nach bestimmten, vom einzulegenden Gang abhängigen Zeiten und damit den gewünschten Druck im Gangzylinder. Der Drucksensor 11 entfällt bei dieser Ausführung.

Anstatt zur Auffüllung den Behälterdruck unmittelbar zuzuschalten, kann die Auffüllung, auch durch eine Pulseinrichtung (nicht dargestellt), die in der Auswerteschaltung 12 enthalten ist, gesteuert werden. Diese Pulseinrichtung unterbricht die Aussteuerung des 2/2-Wege-Ventils 8 in regelmäßigen Zeitabständen. Hierdurch ist eine Verlangsamung des Druckanstiegs im Gegenzylinder 1 und eine entsprechende Schonung des Getriebes 20 zu erzielen. Das Pulsen kann durch den jeweiligen Gang, die Getriebedrehzahl oder durch den Fahrer beeinflußt werden.

Durch eine Rückschaltung des Magnetventils 10 in die gezeichnete Stellung wird nach erfolgter Einlegung des Ganges der Vorraum 6 entlüftet und so die Krafteinwirkung beendet. Dieses ist zur Schonung der Mechanik vorteilhaft und erfolgt durch ein Signal des Getriebes 20 an die Auswerteschaltung 12 sowie ein entsprechendes Signal der Auswerteschaltung an das Magnetventil 10. Die Entlüftung kann auch mit einer Zeitverzögerung erfolgen, um sicherzustellen, daß der Gang auch tatsächlich eingelegt ist.

Zum Einlegen der hinteren Stellung, in der der Kolben 4 rechts steht, wird in entsprechender Weise der Rückraum 7 des Gangzylinders 1 kurzzeitig belüftet. Hierbei muß der Hilfszylinder 2 durch Umschaltung des Ventils 5 entlüftet sein. Die Einstellung des gewünschten Druckes erfolgt in der oben beschriebenen Weise.

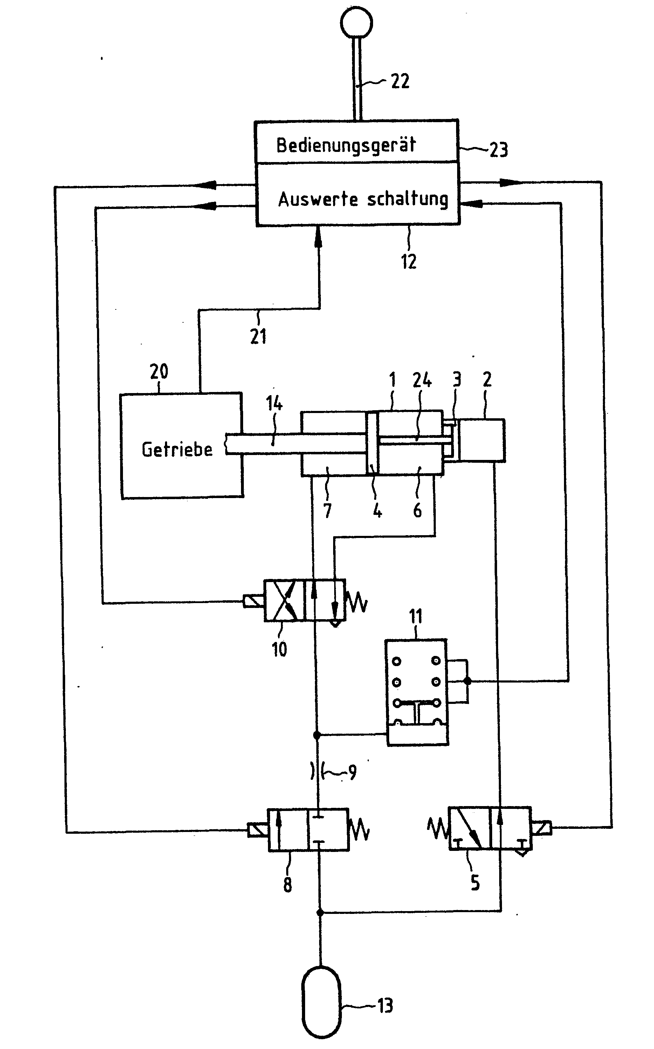

## Patentansprüche

1. Hilfskraftbetätigte Getriebesteuerung mit einem Gangzylinder (1), einem Bedienungsgerät (23), einer elektronischen Auswerteschaltung (12) und einem Druckmittelvorrat (13), wobei der Kolben (4) des Gangzylinders (1) in eine vordere, eine mittlere und eine rückseitige Stellung schaltbar ist, und in der mittleren Stellung gegen einen Anschlag gedrückt ist, dadurch gekennzeichnet, daß der Gangzylinder (1) zum Einlegen des ersten Ganges mit dem vollen Vorratsdruck, und zum Einlegen der höheren Gänge mit einem gegenüber dem vollen Vorratsdruck jeweils verminderten Druck versorgt ist, und daß zum Erreichen der mittleren Stellung des Kolben (4) dieser durch einen gegenüber dem vollen Vorratsdruck verminderten Druck gegen den Anschlag gedrückt ist.

2. Getriebesteuerung nach Anspruch 1, dadurch gekennzeichnet, daß an den doppeltwirkenden Gangzylinder (1) ein Hilfszylinder (2) angebaut ist, dessen Kolben (3) den Kolben (4) des Gangzylinders (1) in der Mittelstellung fixiert und daß gleichzeitig, gesteuert von der Auswerteschaltung (12), der Rückraum (7) des Gangzylinders (1) mit einem gegenüber dem Druck des Vorrats (13) verminderten Druck versorgt, der Vorraum (6) drucklos und der Hilfszylinder (2) mit dem Druck des Vorrats (13) versorgt ist.

3. Getriebesteuerung nach Anspruch 2, gekennzeichnet durch folgende Merkmale:

a) die Versorgung des Hilfszylinders (2) erfolgt über ein 3/2-Wege-Ventil (5);

b) die Versorgung des Vorraumes (6) und des Rückraumes (7) des Gangzylinders (1) erfolgt über ein 2/2-Wegeventil (8), eine Drossel (9) und 4/2-Wege-Wechselventil (10);

c) auf der stromabgewandten Seite der Drossel (9) ist ein den Innendruck des Gangzylinders (1) messender Drucksensor (11) angeschlossen, dessen Ausgang mit der Auswerteschaltung (12) verbunden ist;

d) die Ventile (5, 8, 10) sind als Magnetventile ausgebildet und durch die Auswerteschaltung (12) ansteuerbar;

e) zur Erreichung der Mittelstellung des Kolbens (4) ist das 2/2-Wege-Ventil (8) durch ein Signal der Auswerteschaltung (12) während des Auffüllens des Rückraumes (7) vor Erreichen des vollen Vorratsdruckes abschaltbar.

4. Getriebesteuerung nach Anspruch 3, dadurch gekennzeichnet, daß der jeweilige Arbeitsraum (6, 7) des Gangzylinders (1) nach erfolgtem Hub durch ein vom Drucksensor (11) veranlaßtes Signal der Auswerteschaltung (12) an das Ventil (10) entlüftet ist.

5. Getriebesteuerung nach Anspruch 4, dadurch gekennzeichnet, daß die Entlüftung des jeweiligen Arbeitsraums (6, 7) mit einer Zeitverzögerung erfolgt.

6. Getriebesteuerung nach einem oder mehreren der Ansprüche 2 bis 5, dadurch gekennzeichnet, daß die Beaufschlagung der Arbeitsräume (6, 7) des Gangzylinders (1) zum Schalten in die vordere oder die rückseitige Stellung mit einem gegenüber dem Druck des Vorrats (13) verminderten Druck erfolgt.

7. Getriebesteuerung nach einem oder mehreren der Ansprüche 1 bis 6, wobei zur Erzielung von Drücken, die gegenüber dem Druck des Vorrats (13) vermindert sind, die Auffüllzeit des Gangzylinders (1) begrenzt wird, dadurch gekennzeichnet, daß die Begrenzung der Auffüllzeit durch ein in der Auswerteschaltung (12) enthaltenes Zeitglied erfolgt.

8. Getriebesteuerung nach Anspruch 7, dadurch gekennzeichnet, daß die Begrenzung der Auffüllzeit des Gangzylinders (1) durch ein vom Fahrer gegebenes Signal bewirkt wird.

9. Getriebesteuerung nach Anspruch 7, dadurch gekennzeichnet, daß die Begrenzung der Auffüllzeit des Gangzylinders (1) durch die Auswerteschaltung (12) in Abhängigkeit vom zu schaltenden Gang bewirkt wird.

10. Getriebesteuerung nach Anspruch 7, dadurch gekennzeichnet, daß die Begrenzung der Auffüllzeit des Gangzylinders (1) durch die Auswerteschaltung (12) in Abhängigkeit von der Getriebedrehzahl bewirkt wird.

11. Getriebesteuerung nach Anspruch 7, dadurch gekennzeichnet, daß in der Auswerteschaltung (12) eine Pulseinrichtung zur Ansteuerung des 2/2-Wege-Ventils (8) enthalten ist.

12. Getriebesteuerung nach Anspruch 11, dadurch gekennzeichnet, daß die Pulseinrichtung durch den jeweiligen Gang, die Getriebedrehzahl, oder den Fahrer beeinflußbar ist.

## Claims

1. Servo-operated transmission control system having an operating cylinder (1), an operating apparatus (23), an electronic evaluator circuit (12) and a pressure medium supply (13), the piston (4) of the operating cylinder (1) being switchable into a forward position, a central position and a rearward position and, in the central position, being pressed against a stop, characterised in that for engaging first gear the operating cylinder (1) is supplied with the full supply pressure and for engaging the higher gears the operating cylinder (1) is supplied with a pressure that is in each case reduced with respect to the full supply pressure, and that, in order to obtain the central position of the piston (4), the piston is pressed against the stop by a pressure that is reduced with respect to the full supply pressure.

2. Transmission control system according to claim 1, characterised in that an auxiliary cylinder (2) is attached to the double-acting operating cylinder (1), the piston (3) of which auxiliary cylinder fixes the piston (4) of the operating cylinder (1) in the central position, and that, at the same time, under the control of the evaluator circuit (12), the rear chamber (7) of the operating cylinder (1) is supplied with a pressure that is reduced with respect to the pressure of the supply (13), the forward chamber (6) has no pressure and the auxiliary cylinder (2) is supplied with the pressure of the supply (13).

3. Transmission control system according to claim 2, characterised by the following features:

a) the supply to the auxiliary cylinder (2) is effected by means of a 3 port 2 position valve (5);

b) the supply to the forward chamber (6) and the rear chamber (7) of the operating cylinder (1) is effected by way of a 2 port 2 position valve (8), a throttle (9) and a 4 port 2 position change-over valve (10);

c) on the downstream side of the throttle (9) there is connected a pressure sensor (11) that measures the internal pressure of the operating cylinder (1), the output of the pressure sensor being connected to the evaluator circuit (12);

d) the valves (5, 8, 10) are constructed in the form of solenoid valves and can be actuated by the evaluator circuit (12);

e) in order to obtain the central position of the piston (4), during filling of the rear chamber (7) the 2 port 2 position valve (8) can be closed by a signal from the evaluator circuit (12) before the full supply pressure has been reached.

4. Transmission control system according to claim 3, characterised in that a stroke has been completed, the particular working chamber (6, 7) of the operating cylinder (1) can be evaluated by means of a signal from the evaluator circuit (12) applied to the valve (10) and brought about by the pressure sensor (11).

5. Transmission control system according to claim 4, characterised in that the evacuation of the particular working chamber (6, 7) is effected after a time delay.

6. Transmission control system according to one or more of claims 2 to 5, characterised in that the filling of the working chambers (6, 7) of the operating cylinder (1) for switching into the forward or rearward position is effected with a pressure that is reduced with respect to the pressure of the supply (13).

7. Transmission control system according to one or more of claims 1 to 6 in which, in order to obtain pressures that are reduced with respect to the pressure of the supply (13), the filling period of the operating cylinder (1) is limited, characterised in that the limitation of the filling period is effected by means of a time function element contained in the evaluator circuit (12).

8. Transmission control system according to claim 7, characterised in that the limitation of the filling period of the operating cylinder (1) is effected by a signal given by the driver.

9. Transmission control system according to claim 7, characterised in that the limitation of the filling period of the operating cylinder (1) is effected by the evaluator circuit (12) in dependence upon the gear to be engaged.

10. Transmission control system according to claim 7, characterised in that the limitation of the filling period of the operating cylinder (1) is effected by the evaluator circuit (12) in dependence upon the transmission speed.

11. Transmission control system according to claim 7, characterised in that the evaluator circuit (12) includes a pulse device for actuating the 2 port 2 position valve (8).

12. Transmission control system according to claim 11, characterised in that the pulse device can be influenced by the particular gear, the transmission speed or by the driver.

**Revendications**

1. Servocommande de transmission avec un vérin de vitesse (1), un appareil de commande (23), un circuit traducteur électronique (12) et un réservoir de fluide de pression (13), le piston (4) du vérin de vitesse (1) pouvant être amené dans une position avant, neutre ou arrière et étant appliqué sur une butée dans la position neutre, ladite servocommande étant caractérisée en ce que la vérin de vitesse (1) est alimenté par la pleine pression du réservoir pour l'engagement de la première vitesse et par une pression réduite par rapport à la pleine pression du réservoir pour l'engagement des vitesses supérieures; et pour atteindre la position neutre du piston (4), ce dernier est appliqué sur la butée par une pression réduite par rapport à la pleine pression du réservoir.

2. Servocommande de transmission selon revendication 1, caractérisé en ce que sur le vérin de vitesse (1) à double effet est monté un vérin auxiliaire (2) dont le piston (3) fixe le piston (4) du vérin de vitesse (1) dans la position neutre; et simultanément, avec commande par le circuit traducteur (12), la chambre arrière (7) du vérin de vitesse (1) est alimentée par une pression réduite par rapport à celle du réservoir (13), la chambre avant (6) n'est pas sous pression et le vérin auxiliaire (2) est alimenté par la pression du réservoir (13).

3. Servocommande de transmission selon revendication 2, caractérisée en ce que:

a) l'alimentation du vérin auxiliaire (2) est assurée par un distributeur 3/2 (5);

b) l'alimentation de la chambre avant (6) et de la chambre arrière (7) du vérin de vitesse (1) est assurée par un distributeur 2/2 (8), un étrangleur (9) et un distributeur de renversement 4/2 (10);

c) un capteur de pression (11), mesurant la pression interne du vérin de vitesse (1), est relié en aval de l'étrangleur (9) et sa sortie est reliée au circuit traducteur (12);

d) les distributeurs (5, 8, 10) sont réalisés sous forme de distributeurs électromagnétiques et commandés par le circuit traducteur (12); et

e) pour atteindre la position neutre du piston (4), le distributeur 2/2 (8) est coupé par un signal du circuit traducteur (12) pendant le remplissage de la chambre arrière (7) et avant que la pleine pression du réservoir ne soit atteinte.

4. Servocommande de transmission selon revendication 3, caractérisée en ce que la chambre de travail (6, 7) du vérin de vitesse (1) est purgée après la course par un signal provoqué par le capteur de pression (11) et délivré par le circuit traducteur (12) au distributeur (10).

5. Servocommande de transmission selon revendication 4, caractérisée par une temporisation de la purge de la chambre de travail (6, 7).

6. Servocommande de transmission selon une quelconque des revendications 2 à 5, caractérisée en ce que l'alimentation des chambres de travail (6, 7) du vérin de vitesse (1) s'effectue sous une pression réduite par rapport à celle du réservoir (13) pour l'engagement sur la position avant ou arrière.

7. Servocommande de transmission selon une quelconque des revendications 1 à 6, dans laquelle le remplissage du vérin de vitesse (1) est limité pour obtenir des pressions réduites par rapport à celle du réservoir (13), ladite commande étant caractérisée en ce que la limitation du temps de remplissage s'effectue par un opérateur temporel intégré au circuit traducteur (12).

8. Servocommande de transmission selon revendication 7, caractérisée en ce que la limitation du temps de remplissage du vérin de vitesse (1) est produite par un signal délivré par le conducteur.

9. Servocommande de transmission selon revendication 7, caractérisée en ce que la limitation du temps de remplissage du vérin de vitesse (1) est produite par le circuit traducteur (12) en fonction de la vitesse à engager.

10. Servocommande de transmission selon revendication 7, caractérisée en ce que la limitation du temps de remplissage du vérin de vitesse (1) est produite par le circuit traducteur (12) en fonction de la vitesse de rotation de la transmission.

11. Servocommande de transmission selon revendication 7, caractérisée en ce que le circuit traducteur (12) comprend un dispositif pulsatoire pour commande du distributeur 2/2 (8).

12. Servocommande de transmission selon revendication 11, caractérisée en ce que le dispositif pulsatoire est influencé par la vitesse considérée, la vitesse de rotation de la transmission ou le conducteur.

**0 059 853**